**Europäisches Patentamt**

(19) **European Patent Office**

**Office européen des brevets**

(11) Numéro de publication: **0 034 960**
**A2**

# (12) DEMANDE DE BREVET EUROPEEN

(21) Numéro de dépôt: **81400153.3**

(22) Date de dépôt: 02.02.81

(51) Int. Cl.³: **B 60 N 1/00**

---

(30) Priorité: **21.02.80 FR 8004121**

(43) Date de publication de la demande:
**02.09.81 Bulletin 81/35**

(84) Etats contractants désignés:
**AT BE CH DE GB IT LI LU NL SE**

(71) Demandeur: **Le Forestier, René Paul**

**F-56480 Ruéo en Cléguerec(FR)**

(72) Inventeur: **Le Forestier, René Paul**

**F-56480 Ruéo en Cléguerec(FR)**

(74) Mandataire: **Le Guen, Louis François**
**13, rue Emile Bara BP 91**
**F-35800 Dinard(FR)**

(54) **Suspension pneumatique, notamment pour siège de véhicule.**

(57) La suspension pneumatique comporte une première plaque horizontale (3) destinée à supporter la charge de la suspension et une seconde plaque horizontale (13) fixée au châssis (14) de la suspension, avec une ou plusieurs premières enceintes pneumatiques (19) coincées entre la première et la second plaque.

La première plaque (3) est reliée à la seconde plaque (13) par deux bras latéraux (9, 10) dont les extrémités sont pourvues de tiges (7, 8) pouvant tourner dans des paliers (35, 36 et 5, 6) respectivement fixés à l'arrière de la seconde plaque et à l'avant de la première plaque. L'avant de la première plaque (3) est, de plus, reliée à l'avant de la seconde plaque (13) par un ou plusieurs silent-blocs (25). Les bras latéraux peuvent comporter chacun deux parties rigides réunies par des silent-blocs (26).

Utilisable notamment pour les sièges de tracteurs, de camions.

./...

EP 0 034 960 A2

FIG.2

Suspension pneumatique, notamment pour siège
de véhicule

La présente invention concerne une suspension pneumatique et,
plus particulièrement, une suspension pour siège de véhicule automobile ou aérien.

L'amélioration des dispositifs de suspension des sièges de véhicules soumis à des vibrations importantes ou à des chocs répétés,
tels que les camions, les tracteurs agricoles, les engins de travaux
publics, les véhicules militaires, chars d'assaut, etc., et, dans le
domaine aérien, les hélicoptères, est devenue un besoin urgent tant
sur le plan de la santé des conducteurs de ces véhicules que de leur
confort.

Dans le brevet français 2 116 764, il est déjà décrit un
dispositif de suspension pneumatique comportant deux enceintes gonflables, dont l'une sert de siège proprement dit et l'autre de régulateur d'air, les deux enceintes communiquant l'une avec l'autre. Il
faut noter que cette suspension apporte déjà une amélioration notable
par rapport aux suspensions classiques.

Dans le brevet français 2 224 678, il est décrit une suspension
pneumatique comportant une première plaque horizontale destinée à supporter la charge de la suspension, une seconde plaque horizontale située au-dessous de la première et portée par celle-ci au moyen
d'entretoises, une troisième plaque intermédiaire située entre les
première et seconde plaques et fixée au châssis de la suspension. Une
première pluralité de premières enceintes pneumatiques est coincée
entre la première et la troisième plaque. Une seconde pluralité de
secondes enceintes pneumatiques est coincée entre la troisième et la seconde plaque. Chaque première enceinte est reliée avec une ou plusieurs secondes enceintes par un ou plusieurs conduits. La section des conduits est réglable par un moyen d'étranglement approprié. Le moyen d'étranglement peut présenter au fluide gazeux, généralement de l'air, qui maintient les enceintes pneumatiques gonflées, une section d'écoulement plus forte quand le fluide se dirige vers le bas que quand il se dirige vers le haut. Cette suspension permet de faire varier la réponse aux vibrations appliquées à la suspension, en permettant de faire varier le paramètre d'élasticité en ajustant la pression à l'intérieur des enceintes et de régler l'amortissement en agissant sur le moyen d'étranglement. Les essais effectués sur cette suspension ont montré que l'on peut nettement améliorer la réponse de la suspension à des fréquences qui sont particulièrement nuisibles au confort des conducteurs.

Bien que les résultats obtenus avec les suspensions pneumatiques mentionnées ci-dessus sont nettement meilleurs qu'avec les suspensions classiques, elles nécessitent une stabilisation latérale et longitudinale de la partie du siège qui repose sur les enceintes gonflées, faute de quoi la personne assise est constamment à la recherche d'un équilibre. On rencontre ce genre de phénomène sur les sièges pivotants montés sur roulettes. Or, il est reconnu que cette recherche d'équilibre a des conséquences néfastes pour certaines parties de la colonne vertébrale.

Un objet de la présente invention consiste à prévoir une suspension pneumatique, dans laquelle on peut retrouver tous les avantages des suspensions décrites dans les brevets 2 116 764 et 2 224 678, mais qui, de plus, est nettement améliorée sur le plan de la stabilité latérale et longitudinale.

Suivant une caractéristique de l'invention, il est prévu une suspension pneumatique comportant une première plaque horizontale destinée à supporter la charge de la suspension et une seconde plaque horizontale fixée au châssis de la suspension, avec une ou plusieurs premières enceintes pneumatiques coincées entre la première et la seconde plaque, dans laquelle la première plaque est reliée à la seconde plaque par deux bras latéraux dont les extrémités sont pourvues de tiges pouvant tourner dans des paliers respectivement fixés à l'arrière de la seconde plaque et à l'avant de la première

0034960

3

plaque, l'avant de la première plaque étant, de plus, reliée à l'avant de la seconde plaque par un ou plusieurs silent-blocs.

Suivant une autre caractéristique, les bras latéraux comportent chacun deux parties rigides réunies par des silent-blocs.

Suivant une autre caractéristique, les premières enceintes sont du type des chambres à air de roues de véhicules et des moyens sont montés sur ladite seconde plaque pour limiter leurs déplacements dans le plan horizontal.

Suivant une autre caractéristique, l'arrière de la première plaque et l'arrière de la seconde plaque ont leur écart limité supérieurement par des moyens appropriés, tels que des courroies.

Suivant une autre caractéristique, l'arrière de la première plaque et l'arrière de la seconde plaque ont leur écart limité inférieurement par des butées.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

la Fig. 1 est une vue schématique de côté d'une suspension, suivant l'invention, en position de repos à vide,

la Fig. 2 est une vue schématique de côté de la suspension de la Fig. 1, en charge,

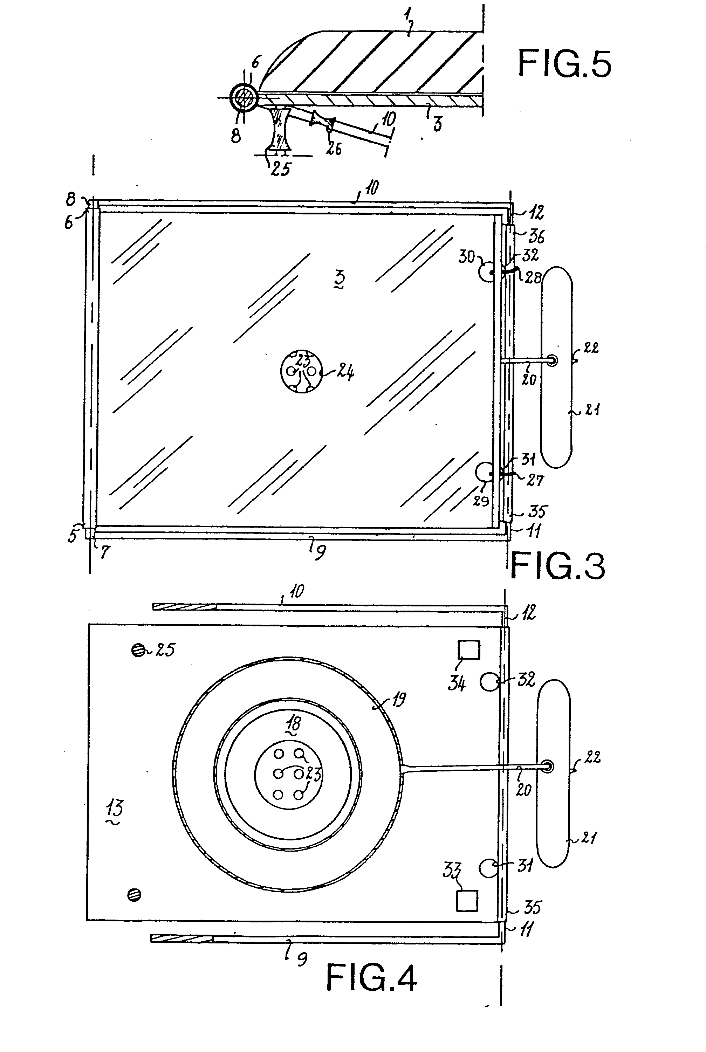

la Fig. 3 est une vue de dessus de la suspension, le coussin étant enlevé,

la Fig. 4 est une vue en coupe horizontale de la suspension de la Fig. 1, suivant la ligne IV-IV, et

la Fig. 5 est une vue en coupe verticale d'une variante d'un détail de la suspension de la Fig. 1.

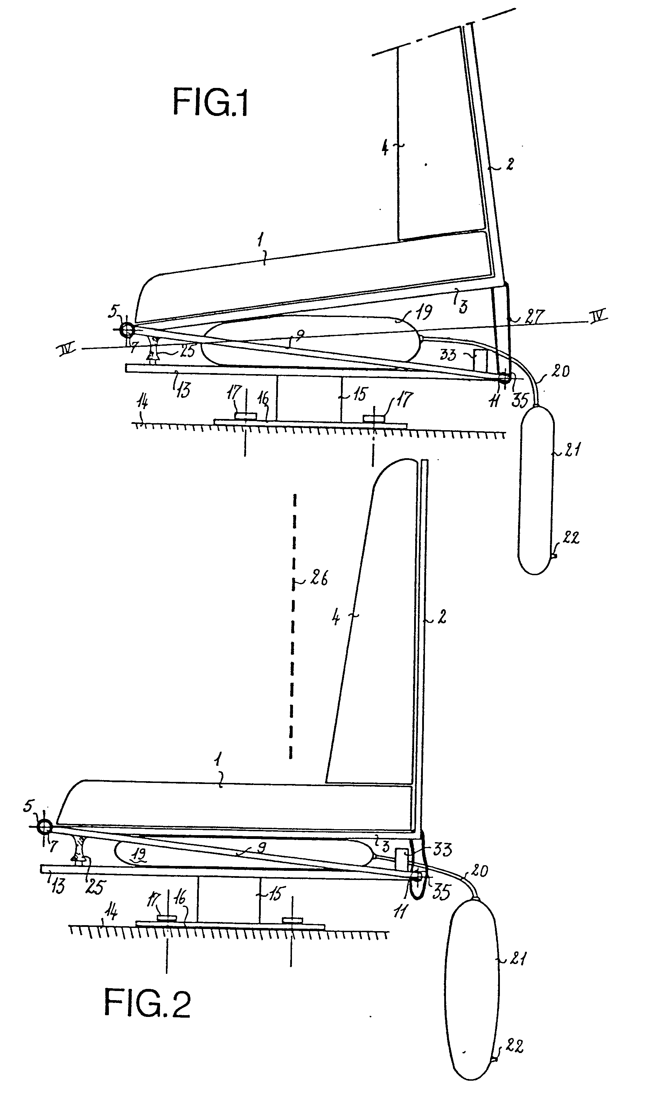

La suspension de la Fig. 1 supporte un siège formé d'un coussin 1, d'un dossier 2, solidaire d'une plaque horizontale 3 et supportant classiquement un coussin dorsal 4. Des accoudoirs, non montrés, solidaires de la plaque 3 peuvent être éventuellement prévus. Des deux côtés de l'avant de la plaque 3 sont prévus des paliers 5 et 6 dans lesquels peuvent tourner des tiges 7 et 8 respectivement montées aux extrémités avant de deux bras 9 et 10. Le plan des bras 9 et 10 fait normalement avec celui de la plaque 3 un angle aigu de l'ordre d'une dizaine de degrés et descend vers l'arrière de la suspension.

Les extrémités arrière des bras 9 et 10 sont respectivement pourvues de courtes tiges 11 et 12 qui peuvent tourner dans des paliers 35 et 36 solidaires de l'arrière d'une plaque 13 qui est rendue solidaire du châssis 14. A titre d'exemple, la plaque 13 est soudée sur une portion de tube cylindrique vertical 15, lui-même soudé sur une plaque 16 fixée au châssis 14 par des vis 17. Dans l'exemple de réalisation décrit, les paliers 5 et 6, d'une part, et 35 et 36, d'autre part, sont les extrémités de tubes dont l'un est soudé à l'avant de la plaque 3 et l'autre à l'arrière de la plaque 13.

La plaque 13 est horizontale, les bras 9 et 10 montent légèrement des tiges 11 et 12 vers les tiges 7 et 8, si bien que, vu de côté, l'ensemble formé par la plaque 3, la paire de bras 9, 10, et la plaque 13 est en forme de Z très aplati.

Autour du centre de la plaque 13, sur sa face supérieure, est monté un cylindre vertical, relativement court 18. Autour du cylindre 18, est posée une enceinte pneumatique torique 19 du type chambre à air de petit diamètre, dont l'intérieur communique, par l'intermédiaire d'un conduit 20 avec une autre enceinte pneumatique 21, située dans un espace libre de manière à ne pas subir de forte contrainte mécanique. L'enceinte 21 peut également être une chambre à air. L'enceinte 21, au moins, est munie d'une valve 22 qui permet de mettre l'air remplissant 19, 20 et 21 sous une pression prédéterminée, par exemple de l'ordre de 50 g/cm$^2$. Comme le montre la Fig. 2, quand le coussin 1 et donc la plaque 3 sont en charge, la chambre 19 est comprimée entre les plaques 3 et 13. Le cylindre 18 a pour objet de retenir la chambre 19 au centre de la plaque 13, en évitant qu'elle ne se déplace notamment vers l'arrière. A l'intérieur de la section du cylindre 18, la plaque 13 est percée de trous 23 qui permettent à l'air emprisonné entre la plaque 3, l'anneau du tore 19 et la plaque 13 de s'échapper librement. De même, sous le coussin 1, en face des trous 23, on peut, pour la même raison, prévoir un ou plusieurs trous 24 dans la plaque 3.

Enfin, entre la zone avant de la plaque 3 et la zone avant de la plaque 13, sont reliés des silent-blocs 25 dont les extrémités sont vissées dans la plaque 3 et la plaque 13.

Quand on compare les positions de la suspension à vide, Fig. 1, et en charge, Fig. 2, il apparaît que la plaque 3 tourne autour de l'axe défini par les tiges 7 et 8, et que la présence des silentblocs 25 évitent tout mouvement latéral ou longitudinal de la plaque 3. La zone arrière de la plaque 3, en face de la ligne 26 en traits tirets, qui symbolise la colonne vertébrale de la personne assise, repose essentiellement sur la chambre 19 et bénéficie de tous les avantages des suspensions décrites dans les brevets français mentionnés ci-dessus. En particulier, on peut monter sur le conduit 20, un dispositif étrangleur, tel que celui qui a été décrit dans le brevet 2 224 678.

Or, c'est effectivement la zone arrière du siège qui doit être protégée contre les chocs et les vibrations. La partie avant du siège sur laquelle reposent plus ou moins, et souvent plutôt moins que plus, les faces internes des articulations des genoux, est découplée du châssis 14, par les silent-blocs 25 et la partie avant de la chambre 19, ce qui assure également un bon amortissement, mais surtout la présence des silent-blocs 25 et les bras 9 et 10 assurent une bonne stabilité du siège dans le plan horizontal.

Comme le montre la coupe de la Fig. 5, les bras 9 et 10 peuvent également comporter des silent-blocs longitudinaux 26, qui atténuent fortement les vibrations qui pourraient se transmettre du châssis 14 à la plaque 3 par l'intermédiaire des bras 9 et 10.

Des courroies 27 et 28, respectivement passées dans des trous 29 et 30 de 3 et 31 et 32 de 13, permettent d'éviter tout basculement du siège vers l'avant, quand il est à vide, comme le montre la Fig. 1, mais encore en cas de freinage brutal ou d'accident. Par contre, en charge, ces courroies 27 et 28 sont lâches et ne créent aucun couplage entre 13 et 3.

Des butées 33 et 34 sont montées verticalement à l'arrière de la plaque 13 pour limiter la descente de l'arrière de la plaque 3, notamment en cas de crevaison ou de fuite dans l'enceinte 19 ou 21.

La chambre 21 peut facilement se loger derrière le siège, ou, par exemple être accrochée derrière le dossier 2.

Bien entendu, même si, dans la description ci-dessus, on a considéré plus particulièrement un siège de véhicule, il faut comprendre que l'invention ne se borne pas à cette application et peut également être utilisée pour d'autres types de suspension.

## REVENDICATIONS

1) Suspension pneumatique, notamment pour siège de véhicule, comportant une première plaque horizontale (3) destinée à supporter la charge de la suspension et une seconde plaque horizontale (13) fixée au châssis (14) de la suspension, avec une ou plusieurs premières enceintes pneumatiques (19) coincées entre la première et la seconde plaque, caractérisée en ce que la première plaque (3) est reliée à la seconde plaque (13) par deux bras latéraux (9 et 10) dont les extrémités sont pourvues de tiges (7 et 8) pouvant tourner dans des paliers (35,36 et 5,6) respectivement fixés à l'arrière de la seconde plaque (13) et à l'avant de la première plaque (3), l'avant de la première plaque (3) étant, de plus, reliée à l'avant de la seconde plaque (13) par un ou plusieurs silent-blocs (25).

2) Suspension suivant la revendication 1, caractérisée en ce que les bras latéraux (9 et10) comportent chacun deux parties rigides réunies par des silent-blocs (26).

3) Suspension suivant la revendication 1 ou 2, caractérisée en ce que les premières enceintes (19) sont du type des chambres à air de roues de véhicules et en ce que des moyens sont montés sur ladite seconde plaque (13) pour limiter leurs déplacements dans le plan horizontal.

4) Suspension suivant l'une des revendications 1 à 3, caractérisée en ce que l'arrière de la première plaque (3) et l'arrière de la seconde plaque (13) ont leur écart limité supérieurement par des moyens appropriés, tels que des courroies (27).

5) Suspension suivant l'une des revendications 1 à 4, caractérisée en ce que l'arrière de la première plaque (3) et l'arrière de la seconde plaque (13) ont leur écart limité inférieurement par des butées (33).

FIG.1

FIG.2

0034960

FIG.5

FIG.3

FIG.4